# EUROPEAN PATENT APPLICATION

(11) **EP 4 597 940 A1**
(43) Date of publication of application: **06.08.2025**
(21) Application number: 22959774.5
(22) Date of filing: 26.09.2022
(51) Int. Cl.: H04L 27/00

(54) **METHODS AND APPARATUSES FOR COMMUNICATION AND COMMUNICATION INDICATION, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Dehns Germany Partnerschaft mbB
(86) International application number: PCT/CN2022/121495
(87) International publication number: WO 2024/065122

(57) **Abstract**

The present disclosure relates to methods and apparatuses for communication and communication indication, and a storage medium. The communication method comprises: receiving indication information sent by a network device, the indication information being used to indicate that a terminal perform communication in a second communication direction with the network device in a symbol of a first communication direction, and/or perform semi-static communication with the network device in a dynamic flexible symbol. According to the present disclosure, the terminal may perform full-duplex communication in a symbol according to indication information sent by the network device. For the symbol in the first communication direction, performing full-duplex communication refers to performing communication in the second communication direction with the network device in the symbol in the first communication direction; and for the dynamic flexible symbol, performing full-duplex communication refers to performing semi-static communication with the network device in the dynamic flexible symbol. Therefore, the terminal may perform full-duplex communication in the symbol, which is beneficial to improving the communication efficiency.

## Description

### TECHNICAL FILED

This disclosure relates to the field of communication technologies, and in particular, to a communication method, a communication indication method, a communication device, a communication indication device, and a computer-readable storage medium.

### BACKGROUND

Currently, terminals only support unidirectional transmission on symbols. For example, in a downlink symbol, a terminal only supports receiving downlink information and does not support sending uplink information. In an uplink symbol, a terminal only supports sending uplink information and does not support receiving downlink information. This restricts the terminal from performing full-duplex communication in symbols and is not conducive to improving communication efficiency.

### SUMMARY

In view of the above, embodiments of this disclosure provide a communication method, a communication indication method, a communication device, a communication indication device, and a computer-readable storage medium to solve technical problems in related art.

According to a first aspect of the embodiments of this disclosure, a communication method is provided, which is performed by a terminal. The method includes: receiving indication information sent by a network device, wherein the indication information is configured to instruct the terminal to perform, in a symbol for a first communication direction, communication in a second communication direction with the network device, and/or perform, in a dynamic flexible symbol, semi-static communication with the network device.

According to a second aspect of the embodiments of this disclosure, a communication indication method is provided, which is performed by a network device. The method includes: sending indication information to a terminal, wherein the indication information is configured to instruct the terminal to perform, in a symbol for a first communication direction, communication in a second communication direction with the network device, and/or perform, in a dynamic flexible symbol, semi-static communication with the network device.

According to a third aspect of the embodiments of this disclosure, a communication device is provided. The device includes: a receiving module configured to receive indication information sent by a network device, wherein the indication information is configured to instruct the terminal to perform, in a symbol for a first communication direction, communication in a second communication direction with the network device, and/or perform, in a dynamic flexible symbol, semi-static communication with the network device.

According to a fourth aspect of the embodiments of this disclosure, a communication indication device is provided. The device includes: a sending module configured to send indication information to a terminal, wherein the indication information is configured to instruct the terminal to perform, in a symbol for a first communication direction, communication in a second communication direction with the network device, and/or perform, in a dynamic flexible symbol, semi-static communication with the network device.

According to a fifth aspect of the embodiments of this disclosure, a communication system is provided, including a terminal and a network-side device. The terminal is configured to implement the above-mentioned communication method, and the network device is configured to implement the above-mentioned communication indication method.

According to a sixth aspect of the embodiments of this disclosure, a communication device is provided, including: a processor and a memory for storing a computer program. When the computer program is executed by the processor, the above-mentioned communication method is implemented.

According to a seventh aspect of the embodiments of this disclosure, a communication device is provided, including: a processor and a memory for storing a computer program. When the computer program is executed by the processor, the above-mentioned communication indication method is implemented.

According to an eighth aspect of the embodiments of this disclosure, a computer-readable storage medium is provided, which is used to store a computer program. When the computer program is executed by a processor, the above-mentioned communication method is implemented.

According to a ninth aspect of the embodiments of this disclosure, a computer-readable storage medium is provided, which is used to store a computer program. When the computer program is executed by a processor, the above-mentioned communication indication method is implemented.

According to the embodiments of this disclosure, the terminal can perform full-duplex communication in symbols according to the indication information sent by the network device. For a symbol for the first communication direction, performing full-duplex communication means performing communication in the second communication direction with the network device, in the symbol for the first communication direction. For a dynamic flexible symbol, performing full-duplex communication means performing semi-static communication with the network device, in the dynamic flexible symbol. Accordingly, the terminal can perform full-duplex communication in symbols, which is conducive to improving communication efficiency.

### BRIEF DESCRIPTION OF THE DRAWINGS

In order to illustrate the technical solutions in the embodiments of this disclosure more clearly, the following briefly introduces the drawings required for the description of the embodiments. Obviously, the drawings in the following description are only some of the embodiments of this disclosure. For those of ordinary skill in the art, other drawings can be obtained without creative efforts.
FIG. 1 is a schematic flowchart of a communication method according to an embodiment of this disclosure.
FIG. 2 is a schematic flowchart of another communication method according to an embodiment of this disclosure.
FIG. 3 is a schematic flowchart of a communication indication method according to an embodiment of this disclosure.
FIG. 4 is a schematic flowchart of another communication indication method according to an embodiment of this disclosure.
FIG. 5 is a schematic block diagram of a communication device according to an embodiment of this disclosure.
FIG. 6 is a schematic block diagram of a communication indication device according to an embodiment of this disclosure.
FIG. 7 is a schematic block diagram of a device for communication indication according to an embodiment of this disclosure.
FIG. 8 is a schematic block diagram of a device for communication according to an embodiment of this disclosure.

### DETAILED DESCRIPTION

The following clearly and completely describes the technical solutions in the embodiments of this disclosure in combination with the drawings in the embodiments of this disclosure. Obviously, the described embodiments are only part of the embodiments of this disclosure, not all of them. Based on the embodiments in this disclosure, all other embodiments obtained by those of ordinary skill in the art without creative efforts fall within the protection scope of this disclosure.

The terms used in the embodiments of this disclosure are only for the purpose of describing specific embodiments and are not intended to limit the embodiments of this disclosure. The singular forms "a/an" and "the" used in the embodiments of this disclosure and the appended claims are also intended to include the plural forms, unless the context clearly indicates otherwise. It should also be understood that the term "and/or" used herein refers to and includes any or all possible combinations of one or more related listed items.

It should be understood that although terms such as "first," "second," and "third" may be used in the embodiments of this disclosure to describe various information, these information should not be limited by these terms. These terms are only used to distinguish the same type of information from each other. For example, without departing from the scope of the embodiments of this disclosure, the first information can also be referred to as the second information, and similarly, the second information can also be referred to as the first information. Depending on the context, the word "if" used herein can be interpreted as "when...", "while...", or "in response to determining".

For the sake of brevity and ease of understanding, the terms "greater than," "less than," "higher than," and "lower than" are used herein to represent size relationships. However, for those skilled in the art, it can be understood that the term "greater than" also covers the meaning of "greater than or equal to", the term "less than" also covers the meaning of "less than or equal to", the term "higher than" covers the meaning of "higher than or equal to", and the term "lower than" covers the meaning of "lower than or equal to".

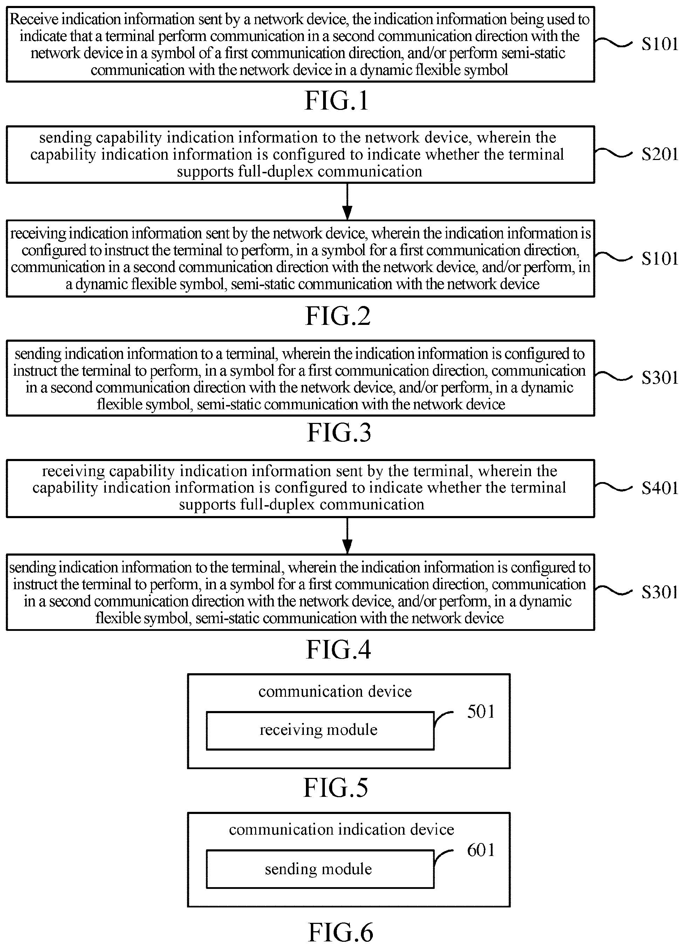

FIG. 1 is a schematic flowchart of a communication method according to an embodiment of this disclosure. The communication method shown in this embodiment can be performed by a terminal. The terminal includes, but is not limited to, communication devices such as mobile phones, tablet computers, wearable devices, sensors, and Internet of Things devices. The terminal can communicate with a network device. The network device includes, but is not limited to, network devices in 4G, 5G, 6G, etc., and other communication systems, such as base stations, core networks, etc.

As shown in FIG. 1, the communication method can include the following steps.

Step S101, receiving indication information sent by a network device, wherein the indication information is configured to instruct the terminal to perform, in a symbol for a first communication direction, communication in a second communication direction with the network device, and/or perform, in a dynamic flexible symbol, semi-static communication with the network device. According to the indication information, the terminal can perform communication in a second communication direction with the network device, in a symbol for a first communication direction, and/or perform semi-static communication with the network device, in a dynamic flexible symbol.

The "symbol" is a time-domain resource for communication, such as an Orthogonal Frequency Division Multiplexing (OFDM) symbol.

The first communication direction and the second communication direction are different communication directions. For example, when the first communication direction is uplink, the second communication direction is downlink; when the first communication direction is downlink, the second communication direction is uplink.

According to the embodiments of this disclosure, the terminal can perform full-duplex communication in symbols according to the indication information sent by the network device. For a symbol for the first communication direction, performing full-duplex communication means performing communication in the second communication direction with the network device, in the symbol for the first communication direction. For a dynamic flexible symbol, performing full-duplex communication means performing semi-static communication with the network device, in the dynamic flexible symbol. Accordingly, the terminal can perform full-duplex communication in symbols, which is conducive to improving communication efficiency.

In some embodiments, "a symbol for a first communication direction" refers to a symbol defined or designated for communication in the first communication direction. Performing, in the symbol for the first communication direction, communication in a second communication direction means performing communication in a direction which is different from the first communication direction, or in other words, performing full-duplex communication in this symbol.

In an embodiment, the first communication direction is uplink, and the second communication direction is downlink; or the first communication direction is downlink, and the second communication direction is uplink.

In an embodiment, the symbol can be included in a slot. The types of symbols included in a slot can be divided into three types: uplink symbols, downlink symbols, and dynamic flexible symbols. The network device can indicate the slot structure through Downlink Control Information (DCI), such as DCI format 2_0. The terminal can determine the type of each symbol in the slot according to the slot structure.

It should be noted that the way the network device indicates the slot structure is not limited to the above embodiments. For example, the network device can also indicate the slot structure (including transmission direction(s) of symbol(s) in the slot) through a Slot Format Indication (SFI). A symbol determined by the terminal based on DCI or SFI can be referred to as a flexible symbol. Alternatively, the network device can indicate the slot structure through Radio Resource Control (RRC) signaling. A symbol determined by the terminal based on RRC signaling can be referred to as a semi-static symbol.

According to the embodiments of this disclosure, the terminal can perform downlink communication (such as receiving data and signals sent by the network device) in an uplink symbol according to the indication information sent by the network device, thereby achieving full-duplex communication in the uplink symbol. The terminal can perform uplink communication (such as sending data and signals to the network device) in a downlink symbol according to the indication information sent by the network device, thereby achieving full-duplex communication in the downlink symbol. The terminal can perform semi-static communication in a dynamic flexible symbol according to the indication information sent by the network device, thereby achieving full-duplex communication in the dynamic flexible symbol.

In an embodiment, when performing, in a symbol for the first communication direction, communication in a second communication direction with the network device according to the indication information, the indication information includes scheduling information and/or configuration information; and/or when performing, in a dynamic flexible symbol, semi-static communication with the network device according to the indication information, the indication information includes configuration information.

The communication in a second communication direction that is performed by the terminal with the network device in a symbol for the first communication direction can be either dynamic or semi-static. For dynamic communication, the network device can perform scheduling through scheduling information (such as DCI), and in this case, the first indication information can be scheduling information. For semi-static communication, the network device can perform configuration through configuration information (such as RRC signaling), and in this case, the first indication information can be configuration information.

When the terminal performs semi-static communication with the network device in a dynamic flexible symbol, the network device can only perform configuration through configuration information, so in this case, the first indication information is configuration information.

In an embodiment, the semi-static communication includes at least one of the following:
Semi-static uplink communication; or
Semi-static downlink communication.

In an embodiment, the semi-static uplink communication includes at least one of the following:
Sending a Configured Grant (CG) Physical Uplink Shared Channel (PUSCH), including but not limited to Type-1 CG PUSCH and Type-2 CG PUSCH;
Sending a periodic Physical Uplink Control Channel (PUCCH); or
Sending a periodic Sounding Reference Signal (SRS).

In an embodiment, the semi-static downlink communication includes at least one of the following:
Receiving a Semi-Persistent Scheduling (SPS) Physical Downlink Shared Channel (PDSCH);
Receiving a periodic Channel Status Information Reference Signal (CSI-RS);
Receiving a periodic Positioning Reference Signal (PRS);
Receiving a periodic Timing Reference Signal (TRS); or
Receiving a periodic Synchronization Signal Block (SSB).

In an embodiment, a frequency-domain resource corresponding to the symbol for the first communication direction is configured with or without a subband for the second communication direction.

For example, when the first communication direction is uplink, the uplink symbol can be in an uplink slot or a flexible slot. In the uplink slot or the flexible slot, the network device can configure a downlink subband for the terminal. The terminal can perform downlink communication in the downlink subband of the frequency-domain resource occupied by the uplink symbol to achieve full-duplex communication. The uplink slot or the flexible slot configured with a downlink subband can be referred to as a SubBand Full Duplex (SBFD) slot. In addition, even if the network device does not configure a downlink subband for the terminal in the frequency-domain resource occupied by the uplink symbol, the terminal can still be configured to perform downlink communication in the uplink symbol.

For example, when the first communication direction is downlink, the downlink symbol can be in a downlink slot or a flexible slot. In the downlink slot or the flexible slot, the network device can configure an uplink subband for the terminal. The terminal can perform uplink communication in the uplink subband of the frequency-domain resource occupied by the downlink symbol to achieve full-duplex communication. The downlink slot or the flexible slot configured with an uplink subband can be referred to as a SBFD slot. In addition, even if the network device does not configure an uplink subband for the terminal in the frequency-domain resource occupied by the downlink symbol, the terminal can still be configured to perform uplink communication in the downlink symbol.

In an embodiment, a frequency-domain resource corresponding to the dynamic flexible symbol is configured with or without an uplink subband, or with or without a downlink subband.

For example, the dynamic flexible symbol can be in an uplink slot or a flexible slot. In the uplink slot or the flexible slot, the network device can configure a downlink subband for the terminal. The terminal can perform semi-static downlink communication in the downlink subband of the frequency-domain resource occupied by the uplink symbol to achieve full-duplex communication. The uplink slot or the flexible slot configured with a downlink subband can be referred to as a SBFD slot. In addition, even if the network device does not configure a downlink subband for the terminal in the frequency-domain resource occupied by the uplink symbol, the terminal can still be configured to perform semi-static downlink communication in the uplink symbol.

For example, the dynamic flexible symbol can be in a downlink slot or a flexible slot. In the downlink slot or the flexible slot, the network device can configure an uplink subband for the terminal. The terminal can perform semi-static uplink communication in the uplink subband of the frequency-domain resource occupied by the downlink symbol to achieve full-duplex communication. The downlink slot or the flexible slot configured with an uplink subband can be referred to as a SBFD slot. In addition, even if the network device does not configure an uplink subband for the terminal in the frequency-domain resource occupied by the downlink symbol, the terminal can still be configured to perform semi-static uplink communication in the downlink symbol.

FIG. 2 is a schematic flowchart of another communication method according to an embodiment of this disclosure. As shown in FIG. 2, the method further includes the following steps.

S201, sending capability indication information to the network device, wherein the capability indication information is configured to indicate whether the terminal supports full-duplex communication.

In an embodiment, the terminal can send capability indication information to the network device to inform the network device whether the terminal supports full-duplex communication through the capability indication information. The network device will send the above-mentioned indication information to the terminal to instruct the terminal to perform full-duplex communication only when it determines that the terminal supports full-duplex communication.

The terminal supporting full-duplex communication includes at least one of the following 4 situations.

The terminal supports sending information to the network device in the uplink subband of a downlink slot;
The terminal supports receiving information sent by the network device in the downlink subband of an uplink slot;
The terminal supports sending semi-static uplink information to the network device in a dynamic flexible symbol;
The terminal supports receiving semi-static downlink information sent by the network device in a dynamic flexible symbol.
The granularity indicated by the capability indication information reported by the terminal can be whether the terminal supports full-duplex communication. If it supports full-duplex communication, it means it supports the above 4 situations; if it does not support full-duplex communication, it means it does not support any of the above 4 situations. Alternatively, the granularity indicated by the capability indication information reported by the terminal can be at least one of the above 4 situations, so that it can be determined, based on the capability indication information, which one or more of the above 4 situations the terminal specifically supports.

FIG. 3 is a schematic flowchart of a communication indication method according to an embodiment of this disclosure. The communication indication method shown in this embodiment can be performed by a network device. The network device can communicate with a terminal. The network device includes, but is not limited to, base stations in communication systems such as 4G, 5G, and 6G. The terminal includes, but is not limited to, communication devices such as mobile phones, tablet computers, wearable devices, sensors, and Internet of Things devices.

As shown in FIG. 3, the communication indication method can include the following steps.

Step S301, sending indication information to a terminal, wherein the indication information is configured to instruct the terminal to perform, in a symbol for a first communication direction, communication in a second communication direction with the network device, and/or perform, in a dynamic flexible symbol, semi-static communication with the network device.

The "symbol" is a time-domain resource for communication, such as an OFDM symbol.

The first communication direction and the second communication direction are different communication directions. For example, when the first communication direction is uplink, the second communication direction is downlink; when the first communication direction is downlink, the second communication direction is uplink.

According to the embodiments of this disclosure, the network device can instruct the terminal to perform full-duplex communication in symbols by sending the indication information to the terminal. For a symbol for the first communication direction, performing full-duplex communication means performing communication in the second communication direction with the network device, in the symbol for the first communication direction. For a dynamic flexible symbol, performing full-duplex communication means performing semi-static communication with the network device, in the dynamic flexible symbol. Accordingly, the terminal can perform full-duplex communication in symbols, which is conducive to improving communication efficiency.

In an embodiment, the first communication direction is uplink, and the second communication direction is downlink; or the first communication direction is downlink, and the second communication direction is uplink.

In an embodiment, the symbol can be included in a slot. The types of symbols included in a slot can be divided into three types: uplink symbols, downlink symbols, and dynamic flexible symbols. The network device can indicate the slot structure through DCI, such as DCI format 2_0. The terminal can determine the type of each symbol in the slot according to the slot structure.

It should be noted that the way the network device indicates the slot structure is not limited to the above embodiments. For example, the network device can also indicate the slot structure (including transmission direction(s) of symbol(s) in the slot) through a SFI. A symbol determined by the terminal based on DCI or SFI can be referred to as a flexible symbol. Alternatively, the network device can indicate the slot structure through RRC signaling. A symbol determined by the terminal based on RRC signaling can be referred to as a semi-static symbol.

According to the embodiments of this disclosure, the network device can instruct the terminal to perform downlink communication (such as receiving data and signals sent by the network device) in an uplink symbol by sending the indication information to the terminal, thereby enabling the terminal to achieve full-duplex communication in the uplink symbol. The network device can instruct the terminal to perform uplink communication (such as sending data and signals to the network device) in a downlink symbol by sending the indication information to the terminal, thereby enabling the terminal to achieve full-duplex communication in the downlink symbol. The network device can instruct the terminal to perform semi-static communication in a dynamic flexible symbol by sending the indication information to the terminal, thereby enabling the terminal to achieve full-duplex communication in the dynamic flexible symbol.

In an embodiment, when the indication information is used to instruct the terminal to perform, in the symbol for the first communication direction, the communication in the second communication direction with the network device, the indication information includes scheduling information and/or configuration information; and/or when the indication information is used to instruct the terminal to perform, in the dynamic flexible symbol, semi-static communication with the network device, the indication information includes configuration information.

The network device instructs the terminal to perform, in the symbol for the first communication direction, communication in the second communication direction with the network device, which can be either dynamic communication or semi-static communication. For dynamic communication, the network device can perform scheduling through scheduling information (such as DCI), and in this case, the indication information can be scheduling information. For semi-static communication, the network device can perform configuration through configuration information (such as RRC signaling), and in this case, the indication information can be configuration information.

When the network device instructs the terminal to perform semi-static communication with the network device in a dynamic flexible symbol, the network device can only perform configuration through configuration information. In this case, the indication information is configuration information.

In an embodiment, the semi-static communication includes at least one of the following:
Semi-static uplink communication; or
Semi-static downlink communication.

In an embodiment, the semi-static uplink communication includes at least one of the following:
Sending a CG PUSCH;
Sending a periodic PUCCH; or
Sending a periodic SRS.

In an embodiment, the semi-static downlink communication includes at least one of the following:
Receiving a SPS PDSCH;
Receiving a periodic CSI-RS;
Receiving a periodic PRS;
Receiving a periodic TRS; or
Receiving a periodic SSB.

In an embodiment, a frequency-domain resource corresponding to the symbol for the first communication direction is configured with or without a subband for the second communication direction.

For example, when the first communication direction is uplink, the uplink symbol can be in an uplink slot or a flexible slot. In the uplink slot or the flexible slot, the network device can configure a downlink subband for the terminal. The terminal can perform downlink communication in the downlink subband of the frequency-domain resource occupied by the uplink symbol to achieve full-duplex communication. The uplink slot or the flexible slot configured with a downlink subband can be referred to as a SBFD slot. In addition, even if the network device does not configure a downlink subband for the terminal in the frequency-domain resource occupied by the uplink symbol, the terminal can still be configured to perform downlink communication in the uplink symbol.

For example, when the first communication direction is downlink, the downlink symbol can be in a downlink slot or a flexible slot. In the downlink slot or the flexible slot, the network device can configure an uplink subband for the terminal. The terminal can perform uplink communication in the uplink subband of the frequency-domain resource occupied by the downlink symbol to achieve full-duplex communication. The downlink slot or the flexible slot configured with an uplink subband can be referred to as a SBFD slot. In addition, even if the network device does not configure an uplink subband for the terminal in the frequency-domain resource occupied by the downlink symbol, the terminal can still be configured to perform uplink communication in the downlink symbol.

In an embodiment, a frequency-domain resource corresponding to the dynamic flexible symbol is configured with or without an uplink subband, or with or without a downlink subband.

For example, the dynamic flexible symbol can be in an uplink slot or a flexible slot. In the uplink slot or the flexible slot, the network device can configure a downlink subband for the terminal. The terminal can perform semi-static downlink communication in the downlink subband of the frequency-domain resource occupied by the uplink symbol to achieve full-duplex communication. The uplink slot or the flexible slot configured with a downlink subband can be referred to as a SBFD slot. In addition, even if the network device does not configure a downlink subband for the terminal in the frequency-domain resource occupied by the uplink symbol, the terminal can still be configured to perform semi-static downlink communication in the uplink symbol.

For example, the dynamic flexible symbol can be in a downlink slot or a flexible slot. In the downlink slot or the flexible slot, the network device can configure an uplink subband for the terminal. The terminal can perform semi-static uplink communication in the uplink subband of the frequency-domain resource occupied by the downlink symbol to achieve full-duplex communication. The downlink slot or the flexible slot configured with an uplink subband can be referred to as a SBFD slot. In addition, even if the network device does not configure an uplink subband for the terminal in the frequency-domain resource occupied by the downlink symbol, the terminal can still be configured to perform semi-static uplink communication in the downlink symbol.

FIG. 4 is a schematic flowchart of another communication indication method according to an embodiment of this disclosure. As shown in FIG. 4, the method further includes the following steps.

Step S401, receiving capability indication information sent by the terminal, wherein the capability indication information is configured to indicate whether the terminal supports full-duplex communication.

In an embodiment, the network device can receive the capability indication information sent by the terminal and determine whether the terminal supports full-duplex communication based on the capability indication information. The network device will send the above-mentioned indication information to the terminal to instruct the terminal to perform full-duplex communication only when it determines that the terminal supports full-duplex communication.

The terminal supporting full-duplex communication includes at least one of the following 4 situations.

The terminal supports sending information to the network device in the uplink subband of a downlink slot;
The terminal supports receiving information sent by the network device in the downlink subband of an uplink slot;
The terminal supports sending semi-static uplink information to the network device in a dynamic flexible symbol;
The terminal supports receiving semi-static downlink information sent by the network device in a dynamic flexible symbol.

The granularity indicated by the capability indication information reported by the terminal can be whether the terminal supports full-duplex communication. If it supports full-duplex communication, it means it supports the above 4 situations; if it does not support full-duplex communication, it means it does not support any of the above 4 situations. Alternatively, the granularity indicated by the capability indication information reported by the terminal can be at least one of the above 4 situations, so that it can be determined, based on the capability indication information, which one or more of the above 4 situations the terminal specifically supports.

Corresponding to the foregoing embodiments of communication methods and communication indication methods, this disclosure also provides embodiments of communication devices and communication indication devices.

FIG. 5 is a schematic block diagram of a communication device according to an embodiment of this disclosure. The communication device illustrated in this embodiment may be a terminal, or a device constituted by a module in a terminal. The terminal includes, but is not limited to, communication devices such as mobile phones, tablet computers, wearable devices, sensors, and Internet of Things devices. The terminal can communicate with a network device. The network device includes, but is not limited to, network devices in 4G, 5G, 6G, etc., and other communication systems, such as base stations, core networks, etc.

As shown in FIG. 5, the communication device includes:
A receiving module 501 configured to receive indication information sent by a network device, wherein the indication information is configured to instruct the terminal to perform, in a symbol for a first communication direction, communication in a second communication direction with the network device, and/or perform, in a dynamic flexible symbol, semi-static communication with the network device.

In an embodiment, when the indication information is configured to instruct the terminal to perform, in the symbol for the first communication direction, the communication in the second communication direction with the network device, the indication information includes scheduling information and/or configuration information; and/or when the indication information is configured to instruct the terminal to perform, in the dynamic flexible symbol, semi-static communication with the network device, the indication information includes configuration information.

In an embodiment, the first communication direction is uplink, and the second communication direction is downlink; or the first communication direction is downlink, and the second communication direction is uplink.

In an embodiment, the semi-static communication includes at least one of:
semi-static uplink communication; or
semi-static downlink communication.

In an embodiment, the semi-static uplink communication includes at least one of:
sending a Configured Grant (CG) Physical Uplink Shared Channel (PUSCH);
sending a periodic Physical Uplink Control Channel (PUCCH); or
sending a periodic Sounding Reference Signal (SRS).

In an embodiment, the semi-static downlink communication includes at least one of:
receiving a Semi-Persistent Scheduling (SPS) Physical Downlink Shared Channel (PDSCH);
receiving a periodic Channel Status Information Reference Signal (CSI-RS);
receiving a periodic Positioning Reference Signal (PRS);
receiving a periodic Timing Reference Signal (TRS); or
receiving a periodic Synchronization Signal Block (SSB).

In an embodiment, a frequency-domain resource corresponding to the symbol for the first communication direction is configured with or without a subband for the second communication direction.

In an embodiment, a frequency-domain resource corresponding to the dynamic flexible symbol is configured with or without an uplink subband, or with or without a downlink subband.

In an embodiment, the communication device further includes: a sending module configured to send capability indication information to the network device, wherein the capability indication information is configured to indicate whether the terminal supports full-duplex communication.

FIG. 6 is a schematic block diagram of a communication indication device according to an embodiment of this disclosure. The communication indication device illustrated in this embodiment may be a network device, or a device constituted by a module in a network device. The network device can communicate with a terminal. The terminal includes, but is not limited to, communication devices such as mobile phones, tablet computers, wearable devices, sensors, and Internet of Things devices. The network device includes, but is not limited to, network devices in 4G, 5G, 6G, etc., and other communication systems, such as base stations, core networks

As shown in FIG. 6, the communication indication device includes:
A sending module 601 configured to send indication information to a terminal, wherein the indication information is configured to instruct the terminal to perform, in a symbol for a first communication direction, communication in a second communication direction with the network device, and/or perform, in a dynamic flexible symbol, semi-static communication with the network device.

In an embodiment, in instructing the terminal to perform, in the symbol for the first communication direction, the communication in the second communication direction with the network device, the indication information includes scheduling information and/or configuration information; and/or in instructing the terminal to perform, in the dynamic flexible symbol, semi-static communication with the network device, the indication information includes configuration information.

In an embodiment, the first communication direction is uplink, and the second communication direction is downlink; or the first communication direction is downlink, and the second communication direction is uplink.

In an embodiment, the semi-static communication includes at least one of:
semi-static uplink communication; or
semi-static downlink communication.

In an embodiment, the semi-static uplink communication includes at least one of:
sending a Configured Grant (CG) Physical Uplink Shared Channel (PUSCH);
sending a periodic Physical Uplink Control Channel (PUCCH); or
sending a periodic Sounding Reference Signal (SRS).

In an embodiment, the semi-static downlink communication includes at least one of:
receiving a Semi-Persistent Scheduling (SPS) Physical Downlink Shared Channel (PDSCH);
receiving a periodic Channel Status Information Reference Signal (CSI-RS);
receiving a periodic Positioning Reference Signal (PRS);
receiving a periodic Timing Reference Signal (TRS); or
receiving a periodic Synchronization Signal Block (SSB).

In an embodiment, a frequency-domain resource corresponding to the symbol for the first communication direction is configured with or without a subband for the second communication direction.

In an embodiment, a frequency-domain resource corresponding to the dynamic flexible symbol is configured with or without an uplink subband, or with or without a downlink subband.

In an embodiment, the communication indication device further includes: a receiving module configured to receive capability indication information sent by the terminal, wherein the capability indication information is configured to indicate whether the terminal supports full-duplex communication.

With respect to the devices in the above embodiments, the specific manner in which each module performs its operations has been described in detail in the embodiments of the relevant methods, and will not be described in detail herein.

For the device embodiments, since they basically correspond to the method embodiments, reference can be made to the partial description of the method embodiments. The device embodiments described above are only schematic. The modules described as separate components may or may not be physically separated, and the components shown as modules may or may not be physical modules, that is, they may be located in one place, or may be distributed to multiple network units. Some or all of the modules can be selected according to actual needs to achieve the purpose of the solutions of this disclosure. Those of ordinary skill in the art can understand and implement it without creative efforts.

Embodiments of this disclosure also provide a communication system including a terminal and a network-side device, wherein the terminal is configured to implement the communication method described in any of the aforementioned embodiments, and the network device is configured to implement the communication indication method described in any of the aforementioned embodiments.

Embodiments of this disclosure further provide a communication device including: a processor; and a memory for storing a computer program; wherein, when the computer program is executed by the processor, the communication method described in any of the aforementioned embodiments is implemented.

Embodiments of this disclosure further provide a communication device including: a processor; and a memory for storing a computer program; wherein, when the computer program is executed by the processor, the communication indication method described in any of the aforementioned embodiments is implemented.

Embodiments of this disclosure further provide a computer-readable storage medium for storing a computer program that, when executed by a processor, causes the processor to implement the communication method described in any of the aforementioned embodiments.

Embodiments of this disclosure further provide a computer-readable storage medium for storing a computer program that, when executed by a processor, causes the processor to implement the communication indication method described in any of the aforementioned embodiments.

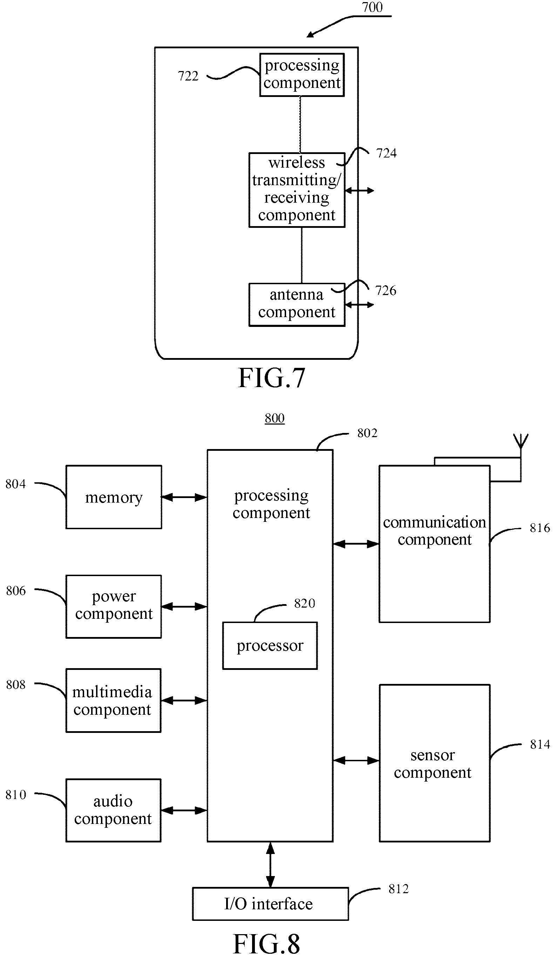

As shown in FIG. 7, FIG. 7 is a schematic block diagram of a device 700 for communication indication according to an embodiment of the present disclosure. The device 700 may be provided as a base station. Referring to FIG. 7, the device 700 includes a processing component 722, a wireless transmitting/receiving component 724, an antenna component 726, and a signal processing part specific to wireless interfaces. The processing component 722 may further include one or more processors. One of the processors in the processing component 722 may be configured to implement the communication indication method described in any of the aforementioned embodiments.

FIG. 8 is a schematic block diagram of a device 800 for communication according to an embodiment of the present disclosure. For example, the device 800 may be a mobile phone, a computer, a digital broadcasting terminal, a message receiving and sending device, a game console, a tablet device, a medical device, a fitness device, a personal digital assistant, etc.

Referring to FIG. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the device 800, such as operations associated with display, telephone calls, data communication, camera operation, and recording operation. The processing component 802 may include one or more processors 820 to execute instructions to complete all or part of the steps of the aforementioned communication method. Furthermore, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support the operation of the device 800. Examples of such data include instructions for any application or method operating on the device 800, contact data, phone book data, messages, images, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disks, or optical disks.

The power component 806 provides power to various components of the device 800. The power component 806 may include a power management system, one or more power sources, and other components associated with generating, managing, and distributing power for the device 800.

The multimedia component 808 includes a screen that provides an output interface between the device 800 and a user. In some embodiments, the screen may include a liquid crystal display (LCD) and a touch panel (TP). If the screen includes a touch panel, the screen may be implemented as a touchscreen to receive input signals from the user. The touch panel includes one or more touch sensors to sense touches, slides, and gestures on the touch panel. The touch sensors may not only sense the boundaries of touch or slide actions but also detect the duration and pressure associated with the touch or slide operations. In some embodiments, the multimedia component 808 includes a front camera and/or a rear camera. When the device 800 is in an operating mode, such as a photography mode or a video mode, the front camera and/or the rear camera may receive external multimedia data. Each of the front camera and the rear camera may be a fixed optical lens system or have focal length and optical zoom capabilities.

The audio component 810 is configured to output and/or input audio signals. For example, the audio component 810 includes a microphone (MIC), which is configured to receive external audio signals when the device 800 is in an operating mode, such as a call mode, a recording mode, and a voice recognition mode. The received audio signals may be further stored in the memory 804 or sent via the communication component 816. In some embodiments, the audio component 810 also includes a speaker for outputting audio signals.

The I/O interface 812 provides an interface between the processing component 802 and peripheral interface modules, which may be a keyboard, a click wheel, buttons, etc. These buttons may include, but are not limited to, a home button, volume buttons, a start button, and a lock button.

The sensor component 814 includes one or more sensors for providing status assessments of various aspects of the device 800. For example, the sensor component 814 may detect the on/off status of the device 800, the relative positioning of components, such as the display and keypad of the device 800, and may also detect changes in the position of the device 800 or a component of the device 800, the presence or absence of user contact with the device 800, the orientation or acceleration/deceleration of the device 800, and temperature changes of the device 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may further include an accelerometer, a gyroscope sensor, a magnetic sensor, a pressure sensor, or a temperature sensor.

The communication component 816 is configured to facilitate wired or wireless communication between the device 800 and other devices. The device 800 can access wireless networks based on communication standards such as Wi-Fi, 2G, 3G, 4G LTE, 5G NR, or combinations thereof. In an exemplary embodiment, the communication component 816 receives broadcast signals or broadcast-related information from an external broadcast management system via broadcast channels. In another exemplary embodiment, the communication component 816 also includes a Near Field Communication (NFC) module to facilitate short-range communication. For example, the NFC module can be implemented based on Radio Frequency Identification (RFID) technology, Infrared Data Association (IrDA) technology, Ultra-WideBand (UWB) technology, Bluetooth^{®} (BT) technology, and other technologies.

In an exemplary embodiment, the device 800 can be implemented by one or more Application-Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors, or other electronic components to perform the aforementioned communication methods.

In an exemplary embodiment, a non-transitory computer-readable storage medium including instructions is also provided, such as a memory 804 including instructions that can be executed by the processor 820 of the device 800 to complete the aforementioned communication methods. For example, the non-transitory computer-readable storage medium can be ROM, Random Access Memory (RAM), CD-ROM, magnetic tape, floppy disk, optical data storage device, etc.

Those skilled in the art, upon considering the specification and practicing the disclosure herein, will readily conceive of other embodiments of the present disclosure. This disclosure is intended to cover any variations, uses, or adaptive changes of this disclosure that follow the general principles of this disclosure and include common knowledge or conventional technical means in the technical field not disclosed herein. The specification and examples are to be considered as exemplary only, and the true scope and spirit of this disclosure are indicated by the following claims.

It should be understood that this disclosure is not limited to the exact structure that has been described and illustrated in the drawings, and various modifications and changes can be made without departing from its scope. The scope of this disclosure is limited only by the appended claims.

It should be noted that, herein, relational terms such as first and second are used merely to distinguish one entity or operation from another entity or operation, and do not necessarily require or imply any actual relationship or order between these entities or operations. The terms "including," "containing," or any other variations thereof are intended to cover non-exclusive inclusions, such that a process, method, item, or device that includes a series of elements not only includes those elements but also includes other elements not explicitly listed, or elements that are inherent to such process, method, item, or device. In the absence of further limitations, elements limited by the phrase "including a/an..." do not exclude the existence of additional identical elements in the process, method, item, or device that includes said elements.

The methods and devices provided by the embodiments of this disclosure have been described in detail above. Specific examples have been used to elaborate on the principles and implementation modes of this disclosure. The descriptions of the above embodiments are only intended to help understand the methods and core ideas of the present disclosure. At the same time, for those skilled in the art, based on the ideas of the present disclosure, there may be changes in specific implementation modes and application scopes. In summary, the content of this specification should not be construed as limiting this disclosure.

## Claims

1. A communication method, performed by a terminal, the method comprising:
receiving indication information sent by a network device, wherein the indication information is configured to instruct the terminal to
perform, in a symbol for a first communication direction, communication in a second communication direction with the network device, and/or
perform, in a dynamic flexible symbol, semi-static communication with the network device.

2. The method according to claim 1, wherein, when the indication information is configured to instruct the terminal to perform, in the symbol for the first communication direction, the communication in the second communication direction with the network device, the indication information comprises scheduling information and/or configuration information; and/or
when the indication information is configured to instruct the terminal to perform, in the dynamic flexible symbol, semi-static communication with the network device, the indication information comprises configuration information.

3. The method according to claim 1, wherein the first communication direction is uplink, and the second communication direction is downlink; or the first communication direction is downlink, and the second communication direction is uplink.

4. The method according to claim 1, wherein the semi-static communication comprises at least one of:
semi-static uplink communication; or
semi-static downlink communication.

5. The method according to claim 4, wherein the semi-static uplink communication comprises at least one of:
sending a Configured Grant, CG, Physical Uplink Shared Channel, PUSCH;
sending a periodic Physical Uplink Control Channel, PUCCH; or
sending a periodic Sounding Reference Signal, SRS.

6. The method according to claim 4, wherein the semi-static downlink communication comprises at least one of:
receiving a Semi-Persistent Scheduling, SPS, Physical Downlink Shared Channel, PDSCH;
receiving a periodic Channel Status Information Reference Signal, CSI-RS;
receiving a periodic Positioning Reference Signal, PRS;
receiving a periodic Timing Reference Signal, TRS; or
receiving a periodic Synchronization Signal Block, SSB.

7. The method according to claim 1, wherein a frequency-domain resource corresponding to the symbol for the first communication direction is configured with or without a subband for the second communication direction.

8. The method according to claim 1, wherein a frequency-domain resource corresponding to the dynamic flexible symbol is configured with or without an uplink subband, or with or without a downlink subband.

9. The method according to any one of claims 1 to 8, further comprising:
sending capability indication information to the network device, wherein the capability indication information is configured to indicate whether the terminal supports full-duplex communication.

10. A communication indication method, performed by a network device, the method comprising:
sending indication information to a terminal, wherein the indication information is configured to instruct the terminal to
perform, in a symbol for a first communication direction, communication in a second communication direction with the network device, and/or
perform, in a dynamic flexible symbol, semi-static communication with the network device.

11. The method according to claim 10, wherein, when the indication information is configured to instruct the terminal to perform, in the symbol for the first communication direction, the communication in the second communication direction with the network device, the indication information comprises scheduling information and/or configuration information; and/or
when the indication information is configured to instruct the terminal to perform, in the dynamic flexible symbol, semi-static communication with the network device, the indication information comprises configuration information.

12. The method according to claim 10, wherein the first communication direction is uplink, and the second communication direction is downlink; or the first communication direction is downlink, and the second communication direction is uplink.

13. The method according to claim 10, wherein the semi-static communication comprises at least one of:
semi-static uplink communication; or
semi-static downlink communication.

14. The method according to claim 13, wherein the semi-static uplink communication comprises at least one of:
sending a Configured Grant, CG, Physical Uplink Shared Channel, PUSCH;
sending a periodic Physical Uplink Control Channel, PUCCH; or
sending a periodic Sounding Reference Signal, SRS.

15. The method according to claim 13, wherein the semi-static downlink communication comprises at least one of:
receiving a Semi-Persistent Scheduling, SPS, Physical Downlink Shared Channel, PDSCH;
receiving a periodic Channel Status Information Reference Signal, CSI-RS;
receiving a periodic Positioning Reference Signal, PRS;
receiving a periodic Timing Reference Signal, TRS; or
receiving a periodic Synchronization Signal Block, SSB.

16. The method according to claim 10, wherein a frequency-domain resource corresponding to the symbol for the first communication direction is configured with or without a subband for the second communication direction.

17. The method according to claim 10, wherein a frequency-domain resource corresponding to the dynamic flexible symbol is configured with or without an uplink subband, or with or without a downlink subband.

18. The method according to any one of claims 10 to 17, further comprising:
receiving capability indication information sent by the terminal, wherein the capability indication information is configured to indicate whether the terminal supports full-duplex communication.

19. A communication device, comprising:
a receiving module configured to receive indication information sent by a network device, wherein the indication information is configured to instruct the terminal to
perform, in a symbol for a first communication direction, communication in a second communication direction with the network device, and/or
perform, in a dynamic flexible symbol, semi-static communication with the network device.

20. A communication indication device, comprising:
a sending module configured to send indication information to a terminal, wherein the indication information is configured to instruct the terminal to
perform, in a symbol for a first communication direction, communication in a second communication direction with the network device, and/or
perform, in a dynamic flexible symbol, semi-static communication with the network device.

21. A communication system, comprising a terminal and a network-side device, wherein the terminal is configured to perform the communication method of any one of claims 1 to 9, and the network device is configured to perform the communication indication method of any one of claims 10 to 18.

22. A communication device, comprising:
a processor;
a memory for storing a computer program;
wherein, when the computer program is executed by the processor, the communication method of any one of claims 1 to 9 is implemented.

23. A communication device, comprising:
a processor;
a memory for storing a computer program;
wherein, when the computer program is executed by the processor, the communication indication method of any one of claims 10 to 18 is implemented.

24. A computer-readable storage medium, for storing a computer program that, when executed by a processor, causes the processor to implement the communication method of any one of claims 1 to 9.

25. A computer-readable storage medium, for storing a computer program that, when executed by a processor, causes the processor to implement the communication indication method of any one of claims 10 to 18.
